(19) Europäisches Patentamt

European Patent Office

Office européen des brevets

(11) Publication number: **0 148 981**

**B1**

(12) **EUROPEAN PATENT SPECIFICATION**

(45) Date of publication of patent specification: 02.12.87

(21) Application number: 84107535.1

(22) Date of filing: 29.06.84

(51) Int. Cl.⁴: **F 16 K 31/528,** F 16 K 5/06

(54) Mechanical control device of ball type valve systems.

(30) Priority: 06.01.84 IT 1906984

(43) Date of publication of application:
24.07.85 Bulletin 85/30

(45) Publication of the grant of the patent:
02.12.87 Bulletin 87/49

(84) Designated Contracting States:
AT BE CH DE FR GB LI LU NL SE

(56) References cited:
CH-A- 296 102
FR-A-2 236 103
FR-A-2 471 539
US-A-3 096 966

(73) Proprietor: **Gnutti, Giuliano**
**Via Rango 18**
**I-25065 Lumezzane S.S. Brescia (IT)**
(73) Proprietor: **Gnutti, Giordano**
**Via Rango 18**
**I-25065 Lumezzane S.S. Brescia (IT)**

(72) Inventor: **Gnutti, Giuliano**
**Via Rango 18**
**I-25065 Lumezzane S.S. Brescia (IT)**
Inventor: **Gnutti, Giordano**
**Via Rango 18**
**I-25065 Lumezzane S.S. Brescia (IT)**

(74) Representative: **Lecce, Giovanni**
**Ufficio Internazionale Calciati S.r.l.**
**Via G. Negri 10**
**I-20123 Milano (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention refers to a mechanical control device of ball type valve systems.

More in particular this invention refers to a mechanical control device of ball type valve systems, for extinguishers and for containers fitted with opening and closing means in general for the controlled delivery of a pressurised fluid.

U.S.—A—3.096.966 discloses a sealed ball valve through which the flow of fluid is controlled by a rotatable spherical ball having a flow passageway setting in reciprocal communication the charging opening of a container with the discharge and delivery nozzle.

For operating the spherical ball between the open and the closed position, the valve is provided with a control means capable of transforming linear input motion into a rotary output motion which turns the ball.

The transmission comprises helical cam grooves and cam followers which are reciprocable relative to each other.

The followers are formed at the end of a pin projecting beyond an actuating plunger linearly moved by a cam rotated by means of a handle.

These known handle type control devices have certain drawbacks and limitation. The most common of these drawbacks is caused by the handle itself, or another means which requires rotation to effect the opening and closing operation. This rotation necessarily requires manipulation which cannot be performed by the same hand that supports a gas cylinder. This drawback is particularly experienced in the case of an extinguisher which, as is known, must be handled rapidly and with reasonable accuracy to direct the gaseous extinguishing fluid in the most appropriate direction to strike the base of the flames to be extinguished.

"Needle" type valves systems are also known in which the manoeuvres of the hand-wheel are replaced by a lever mechanism. However, the known needle type valve systems do not guarantee the necesssary air tightness to prevent the pressurised gaseous fluid contained in the extinguisher cylinder from escaping. Furthermore, in these needle type valve systems, the discharge is not efficiently controlled and gradual. An additional drawback is caused by the fact that in the known needle type systems parassitic phenomenon are created, termed "water hammer", caused by the sudden opening and closing of the gaseous, or also liquid fluid, for example when extinguishing is attempted using water from the local mains network. In fact, closure of the valve means causes a sudden stoppage of the water column up-stream, water that is generally distributed by the normal drinking water network for sanitary and/or civil use.

The aim of this invention is to provide a mechanical control device for valve systems which does not have the above mentioned drawbacks of known devices.

More in particular, the aim of this invention is that of providing a mechanical control device for valve systems, the manipulation of which may be effected in a comfortable and easy way using the same hand that supports the gas cylinder. It has now been found that these and other aims are achieved by a ball valve body with passages which intersect one another at a right angle and by means which control the rotation of the ball valve body comprising a gudgeon pin, coaxial to the discharge port of the container, torsionally bound to the ball valve body and having helical grooves on the free end, and a mobile female component having helical projections engaging with the corresponding grooves of the gudgeon pin and fixed to a first lever pivotable about an axis orthogonal to that of the gudgeon pin; said control means comprising moreover a second fixed lever arranged at a distance, with respect to the first lever, that both levers can be operated together with one hand, and an elastic means, arranged inside the female component, for the return movement of the first lever.

More particularly, the gudgeon pin is torsionally bound to a notch pre-arranged in the ball valve body and engages in a helical manner inside a female component to impose a rotation of sufficient amplitude on the ball valve body to obtain virtually the complete opening and closure of the passages through which discharge of the gaseous extinguishing fluid is made, or possibly of the liquid used for extinguishing.

The device subject of this invention, has sealing means, such as O-rings to ensure tightness between the said pin and the female component inside which the latter rotates.

Furthermore, the device is fitted with at least one return means, such as a spring, to achieve the movement necessary to return the components of the device to their rest position. Movement of the gudgeon pin is obtained by rotation of a lever about an axis formed by a journal that connects this lever to a stationary element which in turn is connected to the cylinder entry.

To facilitate rotation of the lever a stationary element is foreseen, in practice this is a second fixed lever, so that the operator, by using the fingers of just one hand, can simultaneously grip the first lever (mobile) and the second lever (fixed) to handle the complete extinguisher, to direct the jet wherever necessary and desired. Therefore, it can be understood that the device subject of this invention does not include a hand wheel, or other known means and may be handled and manipulated with the greatest freedom and efficiency. In accordance with a variation of the device subject of this invention the female component bearing the helical part which engages the gudgeon pin, may be formed by the same mobile lever. The hinging arrangement of the said lever, with respect to the stationary element, in this case is defined by an elongated slot inside which translation of the mobile lever may occur, to compensate the necesssary relative displacements.

Furthermore, the "pitch" of the helical system, which determines the rotation of the ball valve body is in geometrical relationship with the diameter of the passages which intersect one another inside the said ball valve body.

The device subject of this invention may be completed with a safety split pin which is inserted inside coaxially pre-arranged holes in the sides of the mobile lever, to prevent an accidental displacement of this lever with respect to the stationary element.

A small pressure gauge which indicates the content of the gas cylinder and marks the possible empty condition, may be added, in accordance with the known technique.

The structural and functional characteristics of this control device can be better understood from the following detailed description in which reference is made to the figures of the attached drawings that represent a preferred, illustrative embodiment of the invention, and in which:

fig. 1 represents, partially in view and partially in cross-section, a non-limitative embodiment example of the device subject of this invention, applied to an extinguisher in the closure condition of the passages leading to the delivery of the extinguishing fluid contained in a cylinder (not shown);

fig. 2 represents the same view as fig. 1, but in the delivery condition;

fig. 3 represents a partial cross-section of fig. 1 taken on the flat and in the direction indicated by III—III;

fig. 4 represents the components of the device subject of this invention, partially in view and partially in cross-section and in the condition commonly referred to as an "exploded view";

fig. 5 represents a schematic axial view of the male and female components forming the helical transformation of an axial movement into a rotary movement of the ball valve body; and fig. 6 is analogous to fig. 1, but represents, in a side view and partially in cross-section, an embodiment variation of the device, in which the mobile lever may undergo some displacements.

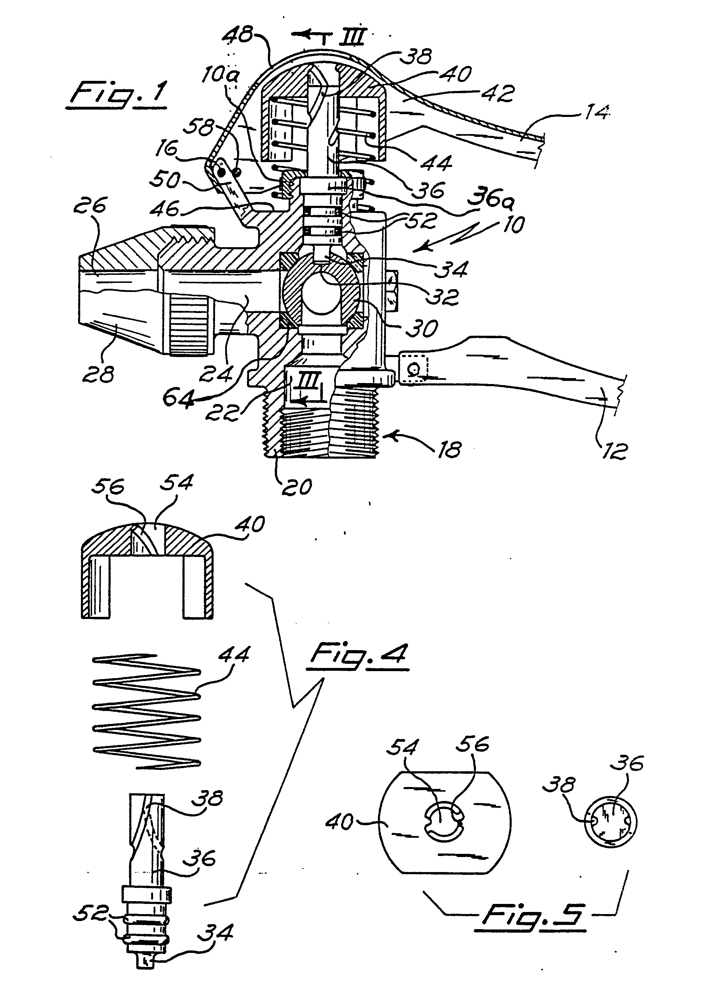

With reference to the attached drawings and in particular to figures 1, 2 and 3, the device 10, which for simplicity will be termed "stationary", includes a fixed lever 12 and a mobile lever 14, oscillating about a journal 16. The distance between these two levers 12 and 14 permits them to be gripped between the fingers of one hand only and the container, (not shown), the mouth of which engages in 18 on the threaded end of the element 20 of the actual valve device, can be easily handled. The element 20 is equipped with an axial passage 22 which intersects (at a right angle, in the embodiment example) with an orthogonal passage 24. The latter terminates in an orifice 26 which is associated with the exit nozzle 28 to deliver the extinguishing fluid, in the case of an extinguisher.

The valve means includes a known ball valve body 30 in which corresponding passages are pre-arranged that, by rotation of the ball body itself, arrange themselves along the entry passage extension 22 and the exit passage 24 respectively setting them in communication with one another.

Rotation of the ball valve body 30 is achieved via the displacement made manually, of moving the mobile lever 14 towards the fixed lever 12. In particular, in the upper part, the ball valve body 30 has a notch 32 in which a shaped projection 34 of a gudgeon pin 36 engages. The said gudgeon pin 36 has one, or more helical grooves 38 on the opposite end to that of the projection 34 in which a coherent projecting helical part 56 of a female component 40 engages, fixed between the sides 42 of the mobile lever 14.

The gudgeon pin 36 is axially bound by the effect of a ring nut 10a, tightened on the threaded end of the device 10, against a batten 36a, which the pin itself has.

During operation, by moving the mobile lever 14 towards the fixed lever 12, the female component 40 moves downwards and, with the projections 56, which engage in the grooves 38, forces the gudgeon pin 36 to turn about its axis pulling the said ball valve body 30 in the direction resulting from the inclination of the helical grooves 38.

In this way the characteristic transformation of the axial movement of the female component 40 into a rotary movement of the gudgeon pin 36 of the ball valve body 30 is obtained.

It is obvious that the rotation of the ball valve body 30 is progressive and may be graduated as a function of the amplitude of the movement of the mobile lever 14, avoiding unwanted "water hammer" phenomena. A spring 44, or other elastic means is arranged inside the female component so as to be hooded. This spring 44 is bound between the internal surface of the female component 40 and the surface 46 of the device 10. Therefore, this spring 44 elastically opposes the vertical downward movement of the female component 40, consequent to that of the mobile lever 14 and thus permits the desired return effects to be achieved.

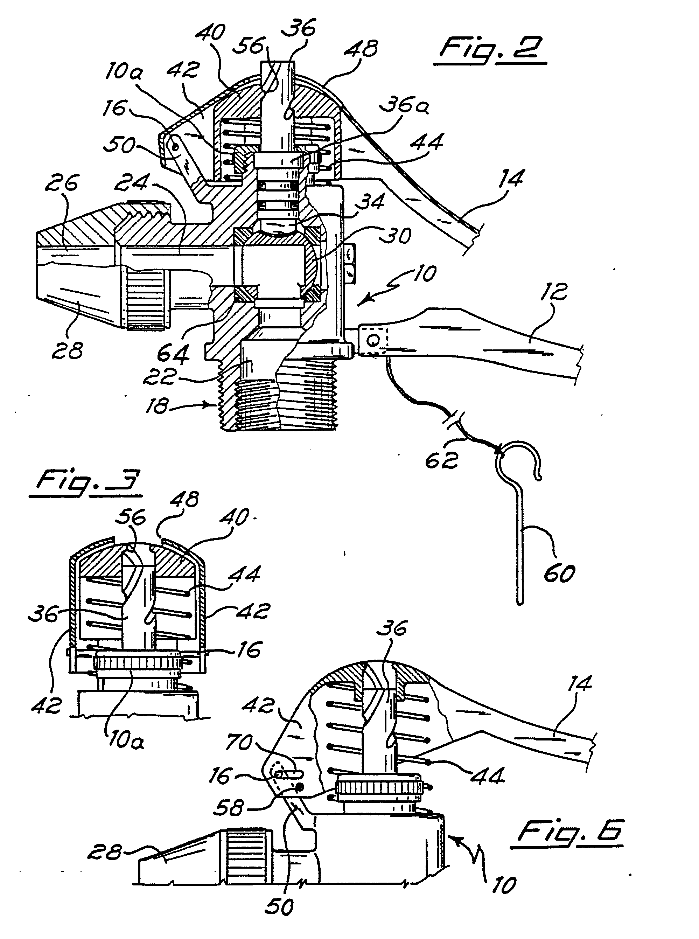

As is particularly noticable in figures 1 and 2, the mobile lever 14 is suitably shaped to facilitate handling and in turn forms a hood over the mechanical control complex and in the upper part has an opening 48 so as not to interfere with the movement of the gudgeon pin 36, which tends to work away from the lever 14 itself during its operation. As already mentioned the said mobile lever 14 oscillates about the journal axis 16 which is supported by a projection 50, integral with the stationary device 10.

The journal axis 16 is spacially orthogonal to that of the said gudgeon pin 36 and is displaced with respect to the latter.

The said ball valve body 30 rotates in an air-tight condition between opposing gaskets 64 made from any known suitable material to ensure a low friction resistance. Similarly, the air-tight seal of the gudgeon pin 36, which effects the rotary movements about its own axis, is ensured by known O-rings 52 pre-arranged in coherent grooves on the said gudgeon pin 36.

Now passing to the details of figures 4 and 5, it is observed how the essential elements of the ball valve body 30 consist of a female component 40 having a hole 54 that limits the helical projections 56, which engage with the coherent grooves 38 of the gudgeon pin 36; the entire complex is arranged to obtain the desired transformation of an axial movement contrasted by the spring 44 into the rotary movement of the ball valve body 30.

The device is completed, in a known manner, by a safety split pin 60 which is inserted inside holes 58, pre-arranged in the sides 42 of the mobile lever 14. The split pin 60 is bound, by means of a flexible element 62, in a known manner, to one of the levers, preferably to the fixed lever 12. The device may be completed by a small pressure gauge (not shown) capable of indicating the charge conditions of the gaseous extinguishing fluid enclosed and conserved inside the cylinder.

A variation of the device is illustrated in figure 6. Here the female component 40 is formed by a mobile lever 14, the sides 42 of which have elongated holes 70 for the translation of the lever itself along the hinging journal 16 during operation of the device.

The other fixed and/or mobile components are entirely analogous to those illustrated in the previous figures.

The device subject of this invention has been illustrated and described above in its association with a cylinder containing a pressurised, possibly liquefied fluid.

This device, being capable of achieving a gradual and controlled variation of the opening and closure of the passages and therefore of avoiding water hammer as described above, may be equally advantageously associated and i.e. with a known cock, or other equivalent valve means.

**Claims**

1. Mechanical control device for ball type valve systems, particularly suitable for containers with opening and closing means for the controlled delivery of a pressurised fluid, including a ball valve body (30) having passages (22, 24) setting in reciprocal communication the charging opening of a container with the discharge and delivery nozzle and means which control the rotation of the said ball valve body (30) for the opening and closure of the valve, said control means consisting of a mechanical transformation system of a linear translation movement into a rotation movement, characterized in that the ball valve body (30) has passages (22, 24) which intersect one another at a right angle and in that the means which control the rotation of the ball valve body (30) comprises gudgeon pin (36), coaxial to the discharge port of the container, torsionally bound to the ball valve body (30) and having helical grooves (38) on the free end, and a mobile female component (40) having helical projections (56) engaging with the corresponding grooves (38) of the gudgeon pin (36) and fixed to a first lever (14) pivotable about an axis (16) orthogonal to that of the gudgeon pin (36); said control means comprising moreover a second fixed lever (12) arranged at a distance, with respect to the first lever (14), that both levers (12) and (14) can be operated together with one hand, and an elastic means (44), arranged inside the female component (40), for the return movement of the first lever (14).

2. Mechanical control device according to claim 1, wherein the female component (40) is fixed between the sides (42) of the mobile lever (14).

3. Mechanical control device according to claim 1 or 2, wherein the mobile lever (14) is provided with an opening (48) in its upper part for the free movement of the gudgeon pin (36).

4. Mechanical control device according to any of the preceding claims, wherein the female component (40) has a hole (54) provided with helical projections (56) engaging with the coherent grooves (38) of the gudgeon pin (36).

5. Mechanical control device according to any of the preceding claims, wherein the female component (40) is constituted by the mobile lever (14).

6. Mechanical control device according to any of the preceding claims, wherein the gudgeon pin (36) has grooves, where O-ring seals (52) are inserted.

7. Mechanical control device according to any of the preceding claims, wherein the sides (42) of the first lever (14) have holes (58) into which a safety split pin (60) is inserted.

8. Mechanical control device according to any of the preceding claims, wherein the gudgeon pin (36) has a batten (36a) for fastening said pin (36) to the device.

**Patentansprüche**

1. Mechanisches Bedienungsgerät für Kugelventilsysteme, insbesondere für Behälter mit Vorrichtungen zum Öffnen und Schliessen für die gesteuerte Verteilung eines luftverdichteten Fluids geeignet; es besteht aus einem Kugelventilkörper (30) mit Duchgängen (22, 24), wodurch die Einlassöffnung mit der Ablass- und Förderdüse in Verbindung gesetzt wird, und Vorrichtungen, die die Drehung dieses Kugelventilkörpers (30) zum Öffnen und Schliessen des Ventils steuern; diese Steuervorrichtungen bestehen aus einem mechanischen System zur Umwandlung einer linearen Translation in eine Drehung, gekennzeichnet durch die Tatsache, dass der Kugelventilkörper (30) Durchgänge (22, 24) hat, die sich in einem rechten Winkel überschneiden, und dadurch, dass die Vorrichtungen, die die Drehung des Kugelventilkörpers (30) steuern, einen Kolbenbolzen enthalten, koaxial zur Ablassöffnung des Behälters in einer Drehverbindung an dem Kugelventilkörper (30) befestigt, mit Drallnuten (38) am freien Ende und einem beweglichen Nutteil (40) mit schraubenförmigen Vorsprüngen (56), in die die entsprechenden Nuten (38) des Kolbenbolzens (36) eingreifen und die an einem ersten Hebel (14) befestigt sind, der auf einer Achse (16), rechtwinklig zu der des Kolbenbolzens (36), drehbar ist; diese Steuervorrichtungen haben ausserdem einen zweiten festen Hebel (12), der im Verhältnis zum ersten Hebel (14) mit einem gewissen Abstand angebracht ist, so dass beide Hebel (12 und 14) zusammen mit einer Hand betätigt werden können, und eine elastische Vorrichtung (44), die sich innerhalb des Nutteils (40) befindet und zur Rückbewegung des ersten Hebels (14) dient.

2. Mechanisches Bedienungsgerät gemäss Patentanspruch 1, bei dem das Nutteil (40) zwischen den Seiten (42) des beweglichen Hebels (14) befestigt ist.

3. Mechanisches Bedienungsgerät gemäss Patentanspruch 1 oder 2, bei dem der erste bewegliche Hebel (14) in seinem oberen Teil mit einer Öffnung (48) zur freien Bewegung des Kolbenbolzens (36) versehen ist.

4. Mechanisches Bedienungsgerät gemäss jeglichem der vorherigen Patentansprüche, bei dem das Nutteil (40) ein Loch (54) hat, das mit schraubenförmigen Vorsprüngen (56) versehen ist, die in die entsprechenden Nuten (38) des Kolbenbolzens (36) eingreifen.

5. Mechanisches Bedienungsgerät gemäss jeglichem der vorherigen Patentansprüche, bei dem das Nutteil (40) aus einem beweglichen Hebel (14) besteht.

6. Mechanisches Bedienungsgerät gemäss jeglichem der vorherigen Patentansprüche, bei dem der Kolbenbolzen (36) Nuten hat, in denen O-Ring Dichtungen (52) eingesetzt sind.

7. Mechanisches Bedienungsgerät gemäss jeglichem der vorherigen Patentansprüche, bei dem die Seiten (42) des ersten Hebels (41) Löcher (56) haben, in die ein Sicherheitssplint (60) eingesetzt wurde.

8. Mechanisches Bedienungsgerät gemäss jeglichem der vorherigen Patentansprüche, bei dem der Kolbenbolzen (36) eine Leiste (36a) zur Befestigung dieses Bolzens (36) an der Vorrichtung hat.

**Revendications**

1. Dispositif mécanique de controle pour systèmes de valves de type à bille, convenant paticulièrement aux réservoirs avec des moyens d'ouverture et fermeture pour la distribution contrôlée d'un fluide pressurisé, composé d'un corps de valve a bille (30), ayant des passages (22, 24) mettant en comunication réciproque les ouvertures de chargement d'un reservoir avec le bec de décharge et distribution, et des moyens qui commandent la rotation du corps de valve a bille (30) pour l'ouverture et la fermeture de la valve, les dits moyens de contrôle étant constitués d'un système de transformation mécanique d'un mouvement de translation linéaire en mouvement rotatoire, caracterisè par le fait que le corps de valve à bille (30) présente des passages (22-24) s'intersécant les uns avec les outres à angle droit, et par le fait que les moyens de contrôle de la rotation du corps de valve à bille (30) comprennent un pivot de transmission (36), coaxial à la sortie de décharge du réservoir, associé torsionnellement au corps de valve à bille (30) et présentant des évidages hélicoïdaux sur l'extrêmité libre, et un composant féminin mobile (40) ayant des projections hélicoïdales (56) s'engageant dans les évidages correspondants (38) du pivot de transmission (36) et fixé à un premier levier (14) pivotant autour d'un axe (16) orthogonal à l'axe du pivot de transmission (36); le dit moyen de contrôle comprenant également un deuxième levier fixe (12) situé à une distance par rapport au premier levier (14), tellé que les deux leviers (12) et (14) puissent être opérés à la main, et un moyen élastique (44), situé dans le composant féminin (40), pour le mouvement de retour du premier levier (14).

2. Dispositif mécanique de contrôle suivant la revendication 1, où le composant féminin (40) est fixé entre les côtés (40) du levier mobile (14).

3. Dispositif mécanique de contrôle suivant les revendications 1 ou 2 où le levier mobile (14) présente une ouverture (48) sur sa partie supérieure pour le mouvement libre du pivot de transmission (36).

4. Dispositif mécanique de contrôle suivant toutes les revendications précédentes, où le composant féminin présente un trou (54) ayant des projections hélicoïdales (56) s'engageant dans les évidages correspondants (38) du pivot de transmission (38).

5. Dispositif mécanique de contrôle suivant toutes les revendications précédentes, où le composant féminin est constitué par le levier mobile (14).

6. Dispositif mécanique de contrôle suivant toutes les revendications précédentes, où le pivot de transmission (36) présente des évidages où des anneaux de tenue -O (52) s'insèrent.

7. Dispositif mécanique de contrôle suivant toutes les revendications précédentes, où les côtés (42) du premier levier (14) présentent des orifices (58) pour l'introduction d'une goupille de sécurité (60).

8. Dispositif mécanique de contrôle suivant toutes les revendications precedentes, où le pivot de transmission (36) presente une traverse (36a) pour fixer le pivot (36) au dispositif.

Fig.1

Fig.4

Fig.5

0 148 981

Fig.2

Fig.3

Fig.6

2